# EUROPEAN PATENT SPECIFICATION

(11) **EP 3 872 005 B1**
(45) Date of publication and mention of the grant of the patent: **31.01.2024**
(21) Application number: 21158869.4
(22) Date of filing: 24.02.2021
(51) Int. Cl.: B65G 1/00, B65G 69/28, B65G 57/02

(54) **LAYERED WAREHOUSE ASSEMBLY**
GESCHICHTE LAGERHALLENANORDNUNG
ENSEMBLE D'ENTREPÔT EN COUCHES

(30) Priority: 25.02.2020 NL 2024988
(43) Date of publication of application: 01.09.2021
(73) Proprietor: Delin Property Asset Management UK Ltd., 3011 AA Rotterdam (NL)
(72) Inventor: DE SITTER, Bart, 9401 POLLARE (BE)
(74) Representative: Algemeen Octrooi- en Merkenbureau B.V.

(56) References cited:
- EP-A1- 0 627 371
- EP-A1- 2 213 596
- WO-A1-2017/217820
- Gogent Holdings Limited: "COGENT LOGITICS HUB BROCHURE", , 16 February 2017 (2017-02-16), pages 1-18, XP055742616, Retrieved from the Internet: URL:https://www.cogentholdingsltd.com/wp-c ontent/uploads/2017/02/Cogent-One-Stop-Log istics-Hub-Brochure.pdf [retrieved on 2020-10-21]

## Description

The present invention relates to a layered warehouse assembly, as well as a combination of an elevated warehouse and an elevated loading platform.

Veen, G. van der (2019). Rethinking XXL Distribution: A case study in North Brabant (MSc thesis), hereinafter referred to as 'van der Veen thesis', provides an overview of different types of layered warehouse assemblies. For example, on page 32 a double floor warehouse is described. The double floor warehouse essentially comprises a first warehouse and a second warehouse, each of the warehouses being configured for storing goods. The second warehouse is arranged on top of the first warehouse, such that two layers of warehouses are formed. Associated with the first warehouse is a first loading platform, on which trucks can be parked to load them with goods stored in the first warehouse. Associated with the second warehouse is a second loading platform, on which trucks can be parked to load them with goods stored in the second warehouse. The second loading platform is partially positioned on the roof of the first warehouse, and partially positioned on top of the first loading platform. The first warehouse and the first loading platform are level with each other and define a first layer of the layered warehouse assembly. The second warehouse and the second loading platform are level with each other and define a second layer of the layered warehouse assembly.

The cogent logistics hub brochure (XP055742616) discloses a layered warehouse assembly according to the preamble of claim 1.

On page 7 of the cogent logistics hub brochure, a multi-layered logistics hub is disclosed wherein five layers of warehouses are arranged on top of each other. Associated with each warehouse is a loading platform, the loading platform also being arranged on top of each other in five different layers. Above the fifth warehouse and loading platform level of the hub is a parking lot for temporarily parking trucks. Above the parking lot a container depot is provided, the container depot for storing (empty) containers in stacks of up to 15 containers on top of each other. When a truck enters the logistics hub with a container full of goods, it first offloads its goods in one or more of the warehouses. It then drives to the parking lot, where container handling equipment can grab the emptied container from the truck. The container is then stored in the container depot. The container depot spans both the warehouse area and the loading platform area.

The same hub is described in European patent EP2213596 B1, which patent is mentioned on page 1 of the brochure.

International patent application WO 2017/217820 A1 describes, with reference to e.g. figure 7 thereof, a container storage hangar comprising a warehouse on the ground floor. Associated with the warehouse is a loading area, also on the ground floor. Arranged above the warehouse and loading area is a car park, on the first floor. Above the car park is a two-layered depot for storing empty containers.

European patent application EP 0 627 371 A1, finally describes a multi-storied warehouse with four layers of warehouses arranged directly above each other and a dispenser arranged next to the warehouse layers. As evidenced by Figures 4 and 10 of EP 0 627 371 A1, trucks for offloading and/or loading goods into and/or from the warehouse wait outside the warehouse, on the parking lot.

Construction sites for building warehouses become more and more scarce and expensive, while at the same time more and more warehouses are needed to support the 'online economy', i.e. the habit of ordering goods online. While the double floor warehouse explained in the van der Veen thesis, compared to an ordinary single floor warehouse, allows to provide more storage capacity on a construction site of a given area, there are also several disadvantages to this concept.

A long ramp is needed to allow trucks to reach the warehouse on the second level, the ramp taking up quite some space on the construction site. Also, compared to the ground floor warehouse the top floor warehouse is limited in size as the trucks must be able to manoeuver on the second loading platform.

The layered warehouse assembly is furthermore relatively expensive in terms of construction costs, as support columns inside the first warehouse must be able to carry very high loads when a second warehouse is built on top of this warehouse. These loads not only come from the weight of the second warehouse itself, but especially from the weight of the goods stored in this second warehouse. Therefore, the support columns must be very large in diameter and/or arranged close to each other, reducing the available storage space in the first warehouse. Also, the foundation below the stacked warehouses must be very strong as a lot of weight must be carried by it. This all leads to high construction costs. The same disadvantage exists for the other references when multiple layers of warehouse are arranged on top of each other.

It is an object of the present invention to provide a layered warehouse assembly that, compared to the multi-floor warehouse described in the above, uses the available space of a construction site more efficiently, and/or that can be constructed at lower costs.

Accordingly, a layered warehouse assembly according to claim 1 is provided.

In accordance with the invention, and in contrast to the known double floor warehouse, the second warehouse is not arranged on top of the first warehouse but right above the first loading platform. For example, when defining an imaginary volume formed by the first loading platform as ground surface and extending upwards in the vertical direction, the second warehouse is at least partially arranged in said imaginary volume. As a further example, when seen in a top view, the second warehouse at least partially overlaps with the first loading platform. In an alternative wording, the first loading platform is at least partially arranged right below the second warehouse.

The layered warehouse assembly according to the present invention, by arranging the second warehouse right above the first loading platform, has as a first advantage that the support columns needed in the first warehouse have a relatively small diameter, and/or that the amount of support columns needed in the first warehouse is relatively limited. Compared to the double floor warehouse of the prior art, the support columns in the first warehouse only have to support a roof of the warehouse (and, in embodiments, a loading platform) instead of a second warehouse and good stored in the second warehouse. Thus, a larger portion of the internal volume of the first warehouse may advantageously be available for storing goods, leading to lower construction costs per usable square meter of storage capacity.

The layered warehouse assembly according to the present invention, by arranging the second warehouse right above the first loading platform, has as a second advantage that the load effected on the foundation below the warehouses is more evenly distributed over the construction site, instead of being concentrated at the half where two warehouses are arranged on top of each other. This significantly reduces the structural requirements for the foundation of the construction site, and results in significantly lower overall construction costs.

The layered warehouse assembly according to the present invention, by arranging the second warehouse right above the first loading platform, has as a third advantage that a large percentage of up to 90% (or even more) of the available ground surface of a construction site may be used for the construction of a warehouse - either directly on the ground or elevated above the ground. For example, when a construction site of 100,000 m² is used for the construction of a layered warehouse assembly in accordance with the invention, up to 90,000 m² or more ground floor area of warehouse may be obtained, the 90,000 m² being the combined ground floor area of both the first and the second warehouse. This is a great improvement compared to 'standard' single-floor warehouses where about half of the construction site may be used to construct a warehouse and the other half of the construction site is needed/used as loading platform. This is also a significant improvement compared to the double floor warehouse described in the van der Veen thesis, where the total combined ground floor area of the two warehouses, on estimation, adds up to only about 60% - 70% of the total surface area of the construction site.

According to the present invention, the warehouse assembly is layered and thus comprises at least two, but possibly more layers. Each layer may e.g. comprise a warehouse and a loading platform associated therewith. Seen in a horizontal plane parallel with the ground surface, a floor of the warehouse may be level with the loading platform, but this is not required per se.

All kinds of goods may be stored in all kinds of different warehouses. The invention is not limited to any particular kind of warehouse or any kind of good stored in the warehouse.

Associated with the first warehouse is a first loading platform. The loading platform may simply be a large area, e.g. of asphalt, on which trucks can drive towards doors of the warehouse so that the trucks can be loaded through said doors. The goods stored in the first warehouse may be loaded into trucks parked on the first loading platform. An elevator or transport belt may e.g. be provided to transport goods stored in the second warehouse to the first warehouse, from which they may be loaded into trucks parked on the first loading platform. Alternatively, a second loading platform may be provided, associated with the second warehouse and e.g. arranged on top of the first warehouse, allowing goods stored in the second warehouse to be loaded into trucks parked on the second loading platform. When the layered warehouse assembly comprises a second loading platform, preferably a ramp leading from the ground level to the second loading platform is provided as well, to allow trucks to drive up to the second loading platform.

The first height level, on which the first warehouse and the first loading platform are arranged, may e.g. correspond to a ground floor level, arranged level with a surrounding of the layered warehouse assembly. Alternatively, the first height level may e.g. be arranged below or above the surroundings of the layered warehouse assembly.

Compared to the first height level, the second height level is elevated, i.e. higher than the first height level. That is, seen in a vertical direction, a floor of the second warehouse is at a higher vertical height than a floor of the first warehouse.

In embodiments, the effective floor area of the second warehouse may be substantially the same as the effective ground area of the first loading platform, e.g. up to 10% larger or less than 10% smaller. However, there may also be a substantial difference of e.g. more than 10%, more than 20% and/or more than 30% in the size of the effective floor area of the second warehouse and the effective ground area of the first loading platform.

In embodiments, the effective floor area of the second warehouse may be substantially the same as the effective floor area of the first warehouse, e.g. up to 10% larger or less than 10% smaller. However, there may also be a substantial difference of e.g. more than 10%, more than 20% and/or more than 30% in the size of the effective floor area of the second warehouse and the effective floor area of the first warehouse.

In embodiments, when seen in a top view, the second warehouse may substantially overlap, e.g. completely overlap, the first loading platform. The second warehouse may in embodiments extend beyond the boundaries of the first loading platform when seen in said top view.

In embodiments, when seen in a top view, the second warehouse may partially overlap the first loading platform, the first loading platform e.g. extending beyond a contour of the second warehouse.

Thelayered warehouse assembly further comprises a second loading platform associated with the second warehouse. The second loading platform is arranged right above the first warehouse. In an alternative wording, the first warehouse is arranged right below the second loading platform. For example, the second loading platform may be arranged on top of the first warehouse, e.g. on the roof thereof. For example, the first and second warehouse and the first and second loading platform may be arranged in a crosswise manner.

The first warehouse and the second warehouse are arranged in an abutting configuration when projected on the same horizontal plane. When projecting each of the warehouses on the same level, the warehouse contours are then in contact with each other, but they do not overlap. Advantageously, when the warehouses do not overlap in such a projection, the foundation below the warehouses may be relatively cheap to construct. Advantageously, when the warehouses are in contact with each other in such a projection, the available area on the construction site is optimally used, with the least amount of empty space.

In an embodiment, the second warehouse is supported by support columns, the support columns being positioned on and e.g. extending vertically upwards with respect to the first loading platform. While trucks may drive and park on the first loading platform, the placement of support columns for the second warehouse thereon will not significantly hamper the efficiency of loading and unloading trucks as the support columns may have a distance of more than 5 meter, in both lateral and longitudinal direction, between them. This leaves more than enough space for trucks to efficiently use the loading platform for manoeuvring and parking purposes.

In an embodiment, the spacing and density of the support columns in the first warehouse and on the first loading platform is the same. However, the load to be carried by the support columns on the first loading platform is higher, as the weight of the second warehouse and the goods stored therein will typically be higher than the weight of the roof of the first warehouse, and optionally the weight of the second loading platform. Therefore, preferably the support columns in the first warehouse have a lower diameter, and thus take up less ground area, than the support columns on the first loading platform.

In an alternative embodiment, a distance between support columns arranged inside the first warehouse is larger than a distance between the support columns positioned on the first loading platform. More in particular, both the lateral spacing and the longitudinal spacing between support columns arranged in the first warehouse (to support the roof thereof and optionally a second loading platform) is larger than the lateral and longitudinal spacing between support columns positioned on the first loading platform (to support the second warehouse and goods stored therein). In other words, the density of the support columns in the first warehouse may be lower than the density of the support columns on the first loading platform.

In an embodiment, at least one of the loading platforms comprises a loading zone, a manoeuvring zone and a parking zone, the loading zone being arranged near the warehouse associated with the loading zone. For example, the warehouse may typically comprise one or more doors through which goods can be loaded into trucks. The loading zone of the loading platform is then preferably arranged adjacent said doors, to allow an easy loading/unloading of the trucks. At the opposite side of the loading zone, a parking zone may be provided. For example, the parking zone may allow to park cars of truck drivers, with which they drive from their home to the layered warehouse assembly, during a working day (or a working night or a working shift). The truck drivers may then drive a truck for a shift duration, loading and/or unloading goods, after which shift duration the truck may be parked on the parking zone or handed over to a next driver. The driver can then take his own car from the parking zone again and drive home.

To allow an unhindered manoeuvring of the trucks, preferably a manoeuvring zone which is free of still-standing vehicles (cars, trucks, etc.) is provided in between the parking zone and the loading zone. The manoeuvring zone allows trucks to reach and exit the loading platform easily.

A loading platform comprising a loading zone, a manoeuvring zone and a parking zone may be arranged at both the first height level and the second height level, only on the first level or only on the second level.

In an embodiment, the floor structure of the second warehouse and the roof structure of the first warehouse are arranged in the same plane when seen in a plane parallel to the horizontal plane. When two warehouses are built on top of each other, a relatively thick floor/roof structure separates the two warehouses. The floor of the second warehouse is then namely arranged above the roof of the first warehouse. For example, when the first and second warehouse each have an internal height of 10m, a floor/roof structure with a height of 2m may be needed, such that the total height of the building is 22m. When the second warehouse is arranged right above the first loading platform, the floor structure of said second warehouse may be lowered with respect to a height on top of or above the roof of the first warehouse. For example, the first loading platform may have a height of 6m - 9m, the floor structure of the second warehouse being arranged above said height. This may e.g. result in a lower total height of 17m - 20m at the position of the second warehouse, while still providing two warehouses with an internal height of 10m. This results in less horizon pollution, which is desirable in general and especially when the warehouse assembly is constructed close to a city.

In an alternative embodiment, when seen in vertical direction, the floor structure of the second warehouse is arranged below or partially below the roof structure of the first warehouse.

In an embodiment a length of at least one of the warehouses is at least 20 m. In an embodiment a width of at least one of the warehouses is at least 10 m. In an embodiment a height of at least one of the warehouses is at least 3 m. In principle, the dimensions of the warehouses are unlimited. The length and width may be up to or exceed 100m, while the height may be up to or exceed 8m. In an embodiment, the first and second warehouses are of a similar size.

In an embodiment, the first loading platform and a floor of the first warehouse are arranged in the same horizontal plane. In an embodiment, the second loading platform and a floor of the second warehouse are arranged in the same horizontal plane. In other words, the floors of the warehouses are preferably level with the loading platforms associated therewith, to allow an easy loading of the trucks. This is however by no means necessary; the floors of the warehouses may also be stepped upwards or downwards with respect to the loading platforms associated therewith.

In an embodiment, the floor of the first warehouse and the loading platform are level with a surrounding of the warehouse assembly. However, they may also be raised or lowered with respect to the surroundings or one of the warehouse and the loading platform may be raised or lowered with respect to the surroundings.

These and other aspects of the invention are elucidated further in the below with reference to the attached figures. In these figures:
Figure 1 schematically illustrates a partially worked-open isometric top view of the layered warehouse assembly according to the invention;
Figure 2 schematically illustrates a cross-sectional view along a vertical plane of the layered warehouse assembly according to the invention;
Figure 3 schematically illustrates a side view of the layered warehouse assembly according to the invention;
Figure 4 schematically illustrates a cross-sectional view along a horizontal plane at a first height level of the layered warehouse assembly according to the invention; and
Figure 5 schematically illustrates a cross-sectional view along a horizontal plane at a second height level of the layered warehouse assembly according to the invention

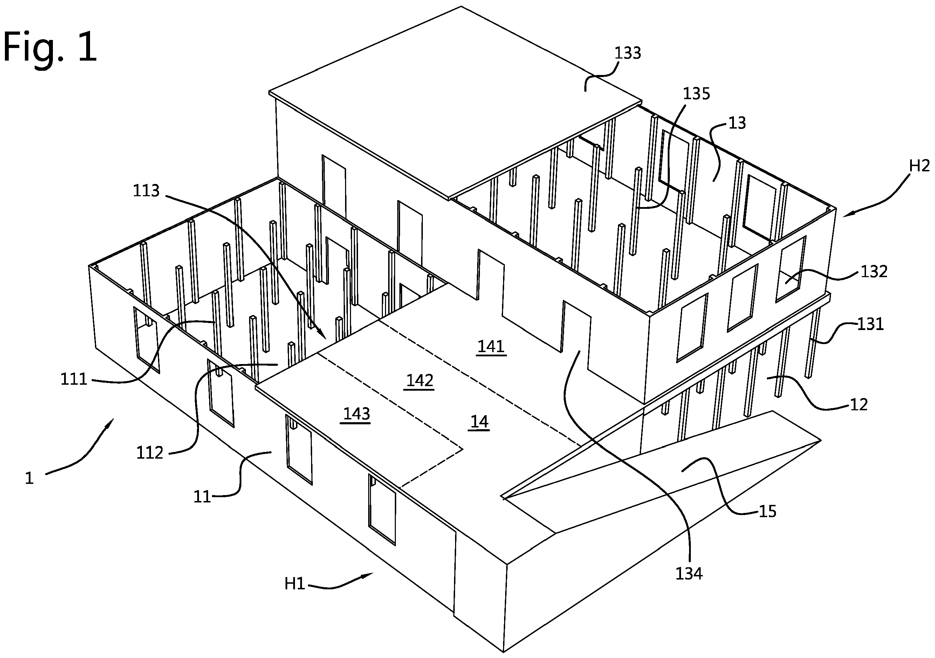

With respect to Figure 1, a layered warehouse assembly 1 is shown. The layered warehouse assembly 1 according to the embodiment of Figure 1 comprises a first warehouse 11 arranged on a ground level. The first warehouse 11 is configured for storing goods, e.g. food or non-food parcels, therein. The first warehouse 11 comprises a floor 112, a roof 113 and doors (not visible in figure 1). Associated with the first warehouse 11 is a first loading platform 12, arranged level with the first warehouse 11. On the loading platform 12, trucks may park close to the doors and unload goods to be stored in the first warehouse 11 and/or to load goods stored in the first warehouse 11 for delivery to consumers and/or businesses.

The layered warehouse assembly 1 further comprises a second warehouse 13. Like the first warehouse 11, the second warehouse 13 is configured for storing goods, e.g. food or non-food parcels, therein. The second warehouse 13 comprises a floor 132, a roof 133 and doors 134. Associated with the second warehouse 13 is a second loading platform 14, arranged level with the second warehouse 13. On the second loading platform 14, trucks may park close to the doors 134 and unload goods to be stored in the second warehouse 13 and/or to load goods stored in the second warehouse 13 for delivery to consumers and/or businesses.

The second warehouse 13 and the second loading platform 14 are, compared to the first warehouse 11 and the first loading platform 12, elevated. A first, lower, height level H1 of the layered warehouse assembly 1 is defined by the first warehouse 11 and first loading platform 12, while a second, upper, height level H2 of the layered warehouse assembly 1 is defined by the second warehouse 13 and the second loading platform 14.

The elevated second warehouse 13 is supported by outer support columns 131 that are arranged on the first loading platform 12. As a result, the elevated second warehouse 13 is arranged right above the first loading platform 11. The elevated second loading platform 14 is then arranged right above the first warehouse 11, on the roof thereof. The elevated second loading platform 14 may be reached by ramp 15.

Further visible in Figure 1 are inner support columns 135 for supporting the roof 133 of the second warehouse 13 and inner support columns 111 for supporting the roof 113 of first warehouse 11.

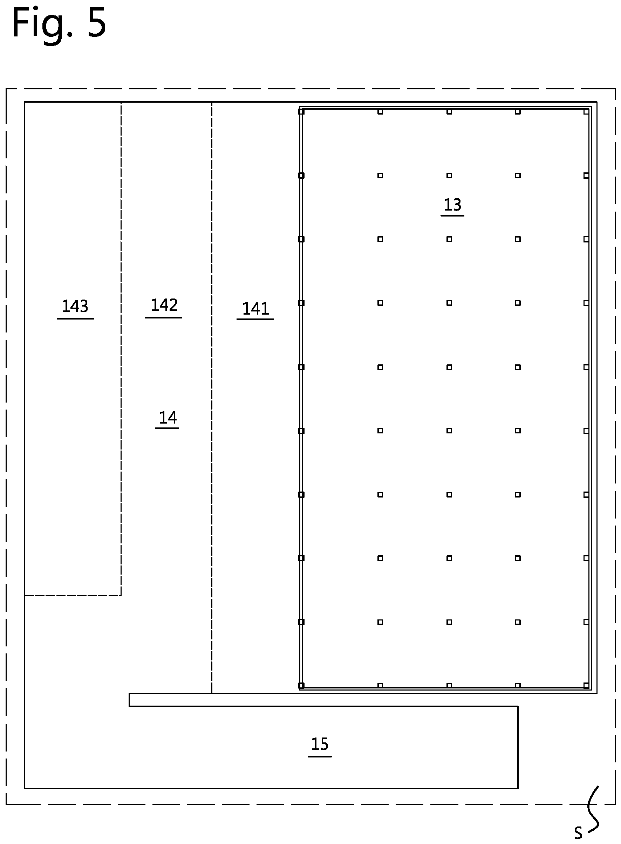

Further visible in Figure 1 are a loading zone 141, manoeuvring zone 142 and parking zone 143 of the second loading platform. This will be explained in more detail with reference to Figure 5.

As visible in Figure 1, the floor 132 of the second warehouse 13 is thicker than the roof 113 of the first warehouse 11 and also thicker than the roof 133 of the second warehouse 13. This is because the loads on the floor 132 of the second warehouse 13 are higher than the loads on the other two structures when the warehouse 13 is filled with goods.

As visible in Figure 1, the roof 113 of the first warehouse 11 is thicker than the roof 133 of the second warehouse 13. This is because the loads on the roof 113 of the first warehouse 11 are higher than on the roof 133 of the second warehouse 13 when a loading platform 14 is arranged on top of the first warehouse 11.

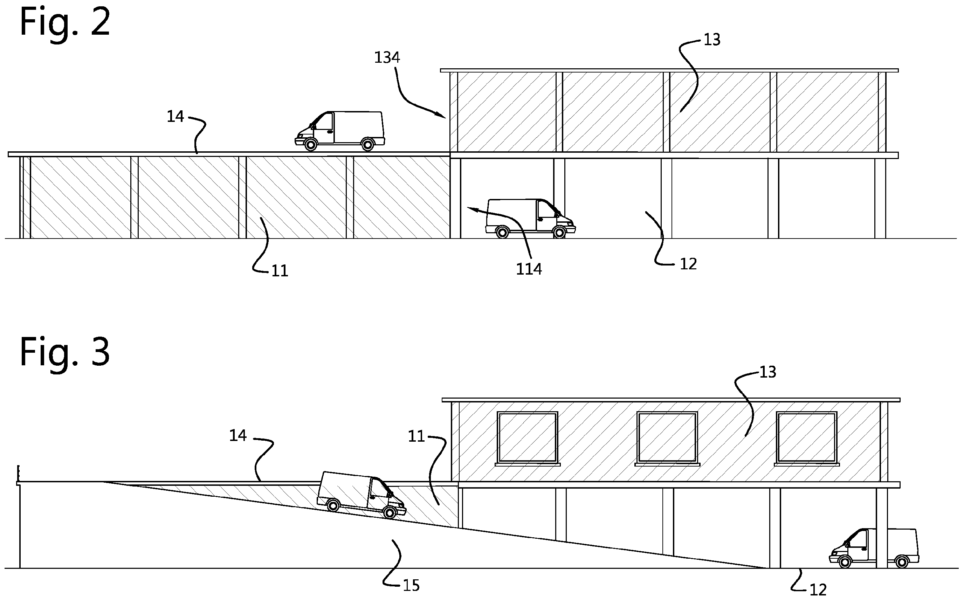

Turning to Figure 2, a cross-sectional view along a vertical plane of the layered warehouse assembly is shown. A truck is here parked on the second loading platform 14, to allow goods to be loaded into / unloaded from the second warehouse 13. A further truck is parked on the first loading platform 12, to allow goods to be loaded into / unloaded from the first warehouse 11. Despite the support columns erected on the first loading platform 12, there is more than enough space between the support columns for trucks to drive and freely manoeuver on the first loading platform 12.

It is again visible that the roof of the first loading area 12 / the floor of the second warehouse 13 is relatively thick as it needs to carry relatively high loads. The roof of the first warehouse 11 / the floor of the second loading area 14 is less thick, and the roof of the second warehouse 13 is even less thick. As also visible in Figure 2, even though the thicknesses of the second warehouse 13 floor and the loading platform 14 floor are different, they are arranged in the same horizontal plane and their top sides are arranged level with each other to allow easy loading and unloading of goods from the loading platform 14 out of and into the warehouse 13.

Turning to Figure 3, the truck previously shown on the second loading platform 14 is driving off the ramp 15, such that it can reach the ground level again.

Advantageously, as shown in Figure 3, the ramp 15 extends along a longitudinal direction of the warehouse assembly 1, leading upwards from the first loading platform 12 and leading towards the elevated second loading platform 14. As is also shown with respect to Figure 5, this placement of the ramp 15 allows to use a relatively large portion of the construction site S to be used for the effective construction of storage space in the form of warehouse area / volume. For example, the total floor area of the first warehouse and the second warehouse may be up to 90% or even more of the ground area of the construction site S, without having to rely on external ramps or constructions.

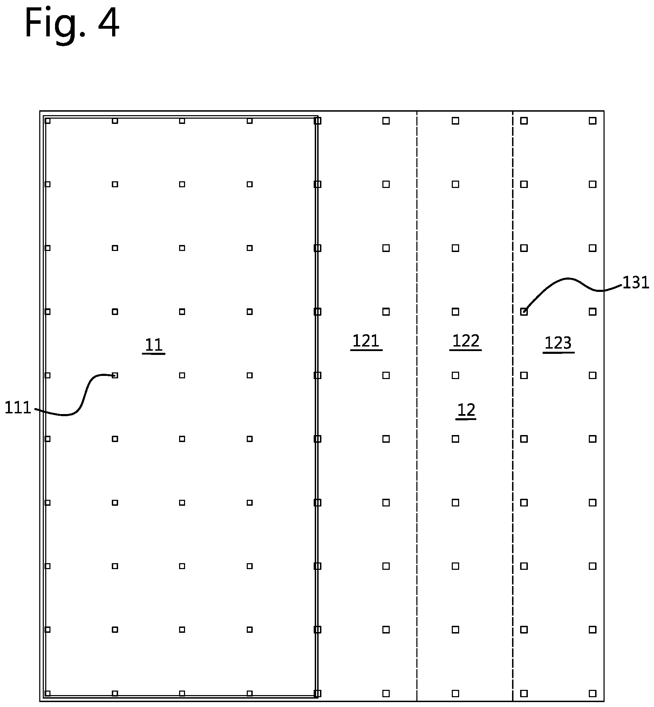

Turning to Figure 4, a horizontal cross-section along the first height level of the layered warehouse assembly is shown. On the first height level, a first warehouse 11 and a first loading platform 12 are provided. The first warehouse 11 comprises internal support columns 111 for supporting (at least) the roof of said warehouse 11. Provided on the first loading platform 12 are support columns 131 for supporting the second warehouse (and the goods stored therein) which is arranged above the first loading platform 12 and supported by said support columns 131. Even though the weight of the second warehouse, including the goods therein, is typically significantly higher than the roof of the first warehouse 11, the lateral and longitudinal distances between the support columns 131 supporting the second warehouse are similar or equal to the lateral and longitudinal distances between the support columns 111 supporting the roof of the first warehouse. The support columns 131 supporting the second warehouse 13 however have a larger diameter to be able to carry the higher loads acting on them.

It is noted here that although the lateral and longitudinal distances between the support columns 131, 111 arranged on the first height level are similar, this is not required per se. The lateral and/or longitudinal distance between the support columns 131 supporting the second warehouse 131 may alternatively be different compared to the lateral and/or longitudinal distance between the support columns 111 supporting the roof of the first warehouse 11.

The first loading platform 12 here comprises a loading zone 121, arranged adjacent the first warehouse 11, a parking zone 123, arranged opposite the first warehouse 11, and a manoeuvring zone 122 arranged in between the loading zone 121 and the parking zone 123.

Turning to Figure 5, a horizontal cross-section along the second height level of the layered warehouse assembly is shown. On the second height level, a second warehouse 13 and a second loading platform 14 are provided. The second warehouse 13 comprises internal support columns for supporting (at least) the roof of said warehouse 13.

The second loading platform 14 here comprises a loading zone 141, arranged adjacent the second warehouse 13, a parking zone 143, arranged opposite the second warehouse 13, and a manoeuvring zone 142 arranged in between the loading zone 141 and the parking zone 143.

Also shown in this view is ramp 15 which leads towards the second loading platform 14 on the second height level from the first height level.

### LIST OF REFERENCE NUMERALS

- 1: Layered warehouse assembly
11 first warehouse
111 support column
112 floor
113 roof
114 door
12 first loading platform
121 loading zone
122 manoeuvring zone
123 parking zone
13 second warehouse
131 support column, external
132 floor
133 roof
134 door
135 support column, internal
14 second loading platform
141 loading zone
142 manoeuvring zone
143 parking zone
15 ramp

- H1: first height level
- H2: second height level
- S: construction site

## Claims

1. A layered warehouse assembly (1), comprising:
- a first warehouse (11) and a second warehouse (13), for storing goods;
- a first loading platform (12) associated with the first warehouse (11), for loading trucks with goods stored in the warehouse (11, 13); and
- a second loading platform (14) associated with the second warehouse (12),
wherein the first warehouse (11) and the first loading platform (12) are arranged at a first height level (H1) to form a first layer of the layered warehouse assembly (1), and
wherein the second warehouse (13) is arranged at a second height level (H2), higher than the first height level (H1), to form a second layer of the layered warehouse assembly (1),
wherein the second warehouse (13) is at least partially arranged right above the first loading platform (12), and
wherein the second loading platform (14) is arranged right above the first warehouse (11),
**characterized in that**
the first warehouse (11) and the second warehouse (13) abut each other when projected in the same horizontal plane.

2. The layered warehouse assembly according to claim 1, wherein the second warehouse (13) is supported by support columns (131) which are positioned on the first loading platform (12).

3. The layered warehouse assembly according to claim 2, wherein a distance between support columns (111) arranged inside the first warehouse (11) is larger than a distance between the support columns (131) positioned on the first loading platform (12).

4. The layered warehouse assembly according to any of the preceding claims, wherein at least one of the loading platforms (12, 14) comprises a loading zone (121, 141), a manoeuvring zone (122, 142) and a parking zone (123, 143), the loading zone (121, 141) being arranged near the warehouse (11, 13) associated with the loading platform (12, 14).

5. The layered warehouse assembly according to any of the preceding claims, wherein, seen in a plane parallel to the horizon, a floor structure (132) of the second warehouse (13) and the roof structure (113) of the first warehouse (11) are arranged in the same plane.

6. The layered warehouse assembly according to any of the preceding claims, wherein a length of at least one of the warehouses (11, 13) is larger than 20 m, and/or wherein a width of at least one of the warehouses (11, 13) is larger than 10 m, and/or wherein a height of at least one of the warehouses (11, 13) is larger than 3 m.

7. The layered warehouse assembly according to any of the preceding claims, wherein the first loading platform (12) and a floor (112) of the first warehouse (11) are arranged in the same horizontal plane and/or wherein the second loading platform (14) and a floor (132) of the second warehouse (13) are arranged in the same horizontal plane.

8. The layered warehouse assembly according to any of the preceding claims, wherein the floor (112) of the first warehouse (11) and the first loading platform (12) are level with a surrounding of the warehouse assembly (1).

## Patentansprüche

1. Schichtlageranordnung (1), umfassend:
- ein erstes Lager (11) und ein zweites Lager (13) zum Lagern von Waren;
- eine dem ersten Lager (11) zugeordnete erste Ladeplattform (12) zum Beladen von Lastkraftwagen mit in dem Lager (11, 13) gelagerten Waren; und
- eine dem zweiten Lager (12) zugeordnete zweite Ladeplattform (14),
wobei das erste Lager (11) und die erste Ladeplattform (12) auf einem ersten Höhenniveau (H1) angeordnet sind, um eine erste Schicht der Schichtlageranordnung (1) zu bilden, und
wobei das zweite Lager (13) auf einem zweiten Höhenniveau (H2) angeordnet ist, das höher als das erste Höhenniveau (H1) ist, um eine zweite Schicht der Schichtlageranordnung (1) zu bilden,
wobei das zweite Lager (13) zumindest teilweise direkt über der ersten Ladeplattform (12) angeordnet ist, und
wobei die zweite Ladeplattform (14) direkt über dem ersten Lager (11) angeordnet ist, **dadurch gekennzeichnet, dass** das erste Lager (11) und das zweite Lager (13) bei Projektion in derselben horizontalen Ebene aneinander anliegen.

2. Schichtlageranordnung nach Anspruch 1, wobei das zweite Lager (13) durch Stützsäulen (131) gestützt ist, die auf der ersten Ladeplattform (12) positioniert sind.

3. Schichtlageranordnung nach Anspruch 2, wobei ein Abstand zwischen in dem ersten Lager (11) angeordneten Stützsäulen (111) größer als ein Abstand zwischen den auf der ersten Ladeplattform (12) angeordneten Stützsäulen (131) ist.

4. Schichtlageranordnung nach einem der vorhergehenden Ansprüche, wobei mindestens eine der Ladeplattformen (12, 14) eine Ladezone (121, 141), eine Manövrierzone (122, 142) und eine Parkzone (123, 143) umfasst, wobei die Ladezone (121, 141) nahe dem der Ladeplattform (12, 14) zugeordneten Lager (11, 13) angeordnet ist.

5. Schichtlageranordnung nach einem der vorhergehenden Ansprüche, wobei, in einer Ebene parallel zum Horizont gesehen, eine Bodenstruktur (132) des zweiten Lagers (13) und die Dachstruktur (113) des ersten Lagers (11) in derselben Ebene angeordnet sind.

6. Schichtlageranordnung nach einem der vorhergehenden Ansprüche, wobei eine Länge mindestens eines der Lager (11, 13) größer als 20 m ist, und/oder wobei eine Breite mindestens eines der Lager (11, 13) größer als 10 m ist, und/oder wobei eine Höhe mindestens eines der Lager (11, 13) größer als 3 m ist.

7. Schichtlageranordnung nach einem der vorhergehenden Ansprüche, wobei die erste Ladeplattform (12) und ein Boden (112) des ersten Lagers (11) in derselben horizontalen Ebene angeordnet sind und/oder wobei die zweite Ladeplattform (14) und ein Boden (132) des zweiten Lagers (13) in derselben horizontalen Ebene angeordnet sind.

8. Schichtlageranordnung nach einem der vorhergehenden Ansprüche, wobei der Boden (112) des ersten Lagers (11) und die erste Ladeplattform (12) auf gleicher Höhe mit einer Umgebung der Lageranordnung (1) sind.

## Revendications

1. Ensemble d'entrepôt en couches (1), comprenant :
- un premier entrepôt (11) et un second entrepôt (13), pour stocker des marchandises ;
- une première plate-forme de chargement (12) associée au premier entrepôt (11), pour charger des camions avec des marchandises stockées dans l'entrepôt (11, 13) ; et
- une seconde plate-forme de chargement (14) associée au second entrepôt (12),
dans lequel le premier entrepôt (11) et la première plate-forme de chargement (12) sont agencés à un premier niveau de hauteur (H1) pour former une première couche de l'ensemble d'entrepôt en couches (1), et
dans lequel le second entrepôt (13) est agencé à un second niveau de hauteur (H2), plus élevé que le premier niveau de hauteur (H1), pour former une seconde couche de l'ensemble d'entrepôt en couches (1),
dans lequel le second entrepôt (13) est agencé au moins partiellement juste au-dessus de la première plate-forme de chargement (12), et
dans lequel la seconde plate-forme de chargement (14) est agencée juste au-dessus du premier entrepôt (11),
**caractérisé en ce que**
le premier entrepôt (11) et le second entrepôt (13) viennent en butée l'un contre l'autre lorsqu'ils sont projetés dans le même plan horizontal.

2. Ensemble d'entrepôt en couches selon la revendication 1, dans lequel le second entrepôt (13) est soutenu par des colonnes de support (131) qui sont positionnées sur la première plate-forme de chargement (12).

3. Ensemble d'entrepôt en couches selon la revendication 2, dans lequel une distance entre les colonnes de support (111) agencées à l'intérieur du premier entrepôt (11) est supérieure à une distance entre les colonnes de support (131) positionnées sur la première plate-forme de chargement (12).

4. Ensemble d'entrepôt en couches selon l'une des revendications précédentes, dans lequel au moins une des plates-formes de chargement (12, 14) comprend une zone de chargement (121, 141), une zone de manoeuvre (122, 142) et une zone de stationnement (123, 143), la zone de chargement (121, 141) étant agencée à proximité de l'entrepôt (11, 13) associé à la plate-forme de chargement (12, 14).

5. Ensemble d'entrepôt en couches selon l'une des revendications précédentes, dans lequel, vues dans un plan parallèle à l'horizon, une structure de plancher (132) du second entrepôt (13) et la structure de toit (113) du premier entrepôt (11) sont agencées dans le même plan.

6. Ensemble d'entrepôt en couches selon l'une des revendications précédentes, dans lequel une longueur d'au moins un des entrepôts (11, 13) est supérieure à 20 m, et/ou dans lequel une largeur d'au moins un des entrepôts (11, 13) est supérieure à 10 m, et/ou dans lequel une hauteur d'au moins un des entrepôts (11, 13) est supérieure à 3 m.

7. Ensemble d'entrepôt en couches selon l'une des revendications précédentes, dans lequel la première plate-forme de chargement (12) et un plancher (112) du premier entrepôt (11) sont agencés dans le même plan horizontal et/ou dans lequel la seconde plate-forme de chargement (14) et un plancher (132) du second entrepôt (13) sont agencés dans le même plan horizontal.

8. Ensemble d'entrepôt en couches selon l'une des revendications précédentes, dans lequel le plancher (112) du premier entrepôt (11) et la première plate-forme de chargement (12) sont au même niveau qu'un environnement de l'ensemble d'entrepôt (1).
